# EUROPÄISCHE PATENTANMELDUNG

(11) **EP 2 051 118 A2**
(43) Veröffentlichungstag der Anmeldung: **22.04.2009**
(21) Anmeldenummer: 08104185.7
(22) Anmeldetag: 30.05.2008
(51) Int. Cl.: G02B 6/42

(54) **Vorrichtung zur Einkopplung von Licht in einen faseroptischen Lichtleiter**

(30) Priorität: 12.06.2007 DE 102007027615
(71) Anmelder: Schott AG, 55122 Mainz (DE)
(72) Erfinder: Meinl, Jürgen, 65329, Hohenstein-Holzhausen (DE)
(74) Vertreter: Schäfer, Horst

(57) **Zusammenfassung**

Die Erfindung betrifft eine faseroptische Vorrichtung mit zumindest einer LED-Lichtquelle, welche wenigstens eine Licht emittierende Halbleiterfläche aufweist, mit einem faseroptischen Lichtleiter, welcher aus einer Vielzahl von optischen Einzelfasern besteht, die an einem Ende zu einer Licht aufnehmende Eintrittsfläche zusammengefasst sind, und einer Linsenanordnung mit einander unmittelbar zugeordneten, optischen Linsen, welche das Licht der LED-Lichtquelle auf die Eintrittsfläche abbildet.

Um die Einkopplung von LED-Licht in einen Lichtleiter hinsichtlich technischem Aufwand und Wirkungsgrad sowie wirtschaftlicher Kosten zu optimieren, das Licht verschiedener Typen von LED-Lichtquellen in gleicher Weise einsetzbar zu machen und unerwünschte optische Effekte bei der Lichtübertragung zu vermieden, wird vorgeschlagen, dass die Linsenanordnung wenigstens zwei aspherische Linsen umfasst, mit wenigstens einer Eingangslinse und einer demgegenüber im Durchmesser vergrößerten Ausgangslinse, und dass jeder Licht emittierenden Halbleiterfläche eine Eingangslinse zugeordnet ist.

## Beschreibung

Die Erfindung betrifft eine faseroptische Vorrichtung mit zumindest einer LED-Lichtquelle, welche wenigstens eine Licht emittierende Halbleiterfläche aufweist, mit einem faseroptischen Lichtleiter, welcher aus einer Vielzahl von optischen Einzelfasern besteht, die an einem Ende zu einer Licht aufnehmende Eintrittsfläche zusammengefasst sind, und einer Linsenanordnung mit einander unmittelbar zugeordneten, optischen Linsen, welche das Licht der LED-Lichtquelle auf die Eintrittsfläche abbildet.

Für die Einkopplung von Licht einer LED-Lichtquelle in einen Lichtleiter sind unterschiedliche Vorrichtungen und Verfahren bekannt. Diese Vorrichtungen beziehungsweise Verfahren dienen im Allgemeinen dazu, Lichtquellen mit anderen Lichterzeugungstechniken, wie beispielsweise Halogen- und Gasentladungslampen, zu ersetzen, um verbesserte Bedingungen für Lebensdauer beziehungsweise Energieeffizienz der Lichtquelle zu gewährleisten. LED-Lichtquellen werden auch dann bevorzugt eingesetzt, wenn veränderbar farbiges Licht erzeugt werden soll.

Des Weiteren werden faseroptische Vorrichtungen dieser Art eingesetzt, um Licht mittels faseroptischer Lichtleiter über größere Distanzen oder durch für Licht schlecht oder nicht durchdringbares Material von der Lichtquelle zum Beleuchtungsort weitgehend verlustfrei zu transportieren. Der faseroptische Lichtleiter umfasst dabei eine Vielzahl von optischen Einzelfasern, welche vorzugsweise als Glasfasern ausgeführt sind. Andere faseroptische Materialien sind erfindungsgemäß ebenfalls einsetzbar und dementsprechend vom Gegenstand der Erfindung umfasst. Dabei bilden diese Einzelfasern an dem für die Einkopplung vorgesehenen Lichtleiterende eine Eintrittsfläche für das Licht.

Es ist bekannt, dass es erforderlich ist, das Licht der LED-Lichtquelle möglichst vollständig in den faseroptischen Lichtleiter einzukoppeln, um zufriedenstellend andere Lichterzeugungstechniken ersetzen zu können. Bei der Verwendung von LED-Licht mit einem faseroptischen Lichtleiter treten die größten Verluste bekanntlich bei der Einkoppelung des LED-Lichts in den Lichtleiter auf.

Als LED-Lichtquelle wird in Zusammenhang mit der Erfindung eine Leuchtdiode oder eine Leuchtdiodenanordnung verstanden, welche wenigstens eine Licht emittierende Halbleiterfläche aufweist. Dabei sind sowohl Leuchtdioden gemeint, welche weißes Licht emittieren, als auch Leuchtdioden, welche Farblicht emittieren. Des Weiteren sind sowohl Leuchtdioden von der Erfindung umfasst, deren Halbleiterflächen das Licht in einem spektralen (monochromatischen) Bereich emittieren sowie auch Leuchtdioden, deren Halbleiterflächen eine Kombination von monochromatisch emittierenden Halbleiterflächen umfassen, wobei die Kombination dieser Halbleiterflächen bestimmte, durch die Mischung des Lichts hervorgerufene Farben bei Fernfeldbetrachtung, erzeugen kann.

Solche LED-Lichtquellen sind im Allgemeinen gegenüber Halogen- und Gasentladungslampen lichtschwächer, das heißt es wird pro Flächeneinheit der Licht erzeugenden Fläche bei der LED-Lichtquelle weniger Lichtleistung erzeugt, als bei den zu ersetzenden Lichterzeugungstechniken. Dies wirkt sich bei der Einkopplung von Licht in einen Lichtleiter nachteilig aus, da eine größere Lichtleistung bei LED-Lichtquellen zumeist mit einer entsprechend größeren Licht erzeugenden Halbleiterfläche verbunden ist.

Mit der Erfindung ist erkannt worden, dass die optischen Randbedingungen der LED-Lichtquelle und des Linsensystems für die Optimierung des Wirkungsgrades der Lichteinkopplung in den Lichtleiter es erfordern, dass die Licht erzeugende Fläche im Verhältnis zu der Eintrittsfläche des Lichtleiters groß ist.

Dem gegenüber erfordern die optischen Randbedingungen des faseroptischen Lichtleiters beziehungsweise seiner Eintrittsfläche für die Optimierung des Wirkungsgrades, dass die Licht erzeugende Fläche im Verhältnis zur Eintrittsfläche des Lichtleiters klein sein muss. Damit wird gewährleistet, dass der vom Lichtleiter vorgegebene Raumwinkel für die Erfassung des insgesamt zur Verfügung stehenden Lichts vom Linsensystem nicht überschritten wird und somit Lichtverluste einhergehen.

Um diesen sich widersprechenden Anforderungen gerecht zu werden, wurde bei bekannten Vorrichtungen versucht, das Licht der LED-Lichtquelle mittels Primärlinse, welche unmittelbar mit der Licht erzeugenden Fläche verbunden ist, so zu bündeln, dass eine hinsichtlich der Verlustreduzierung optimierte Einkopplung in einen Lichtleiter noch möglich war.

Alternativ oder ergänzend dazu war vorgesehen, die Lichtleiter unmittelbar auf der Licht erzeugende Fläche und somit in sogenannter direkter Stoßkopplung auf der LED-Lichtquelle anzuordnen.

Des weiteren sind Kunststoffspritzgussteile als sogenannte LED-Aufsatzoptik zum Einsatz gekommen, um den Wirkungsgrad der Lichteinkopplung zu verbessern. Diese müssen wie die Primärlinsen unmittelbar auf der Licht erzeugenden Halbleiterfläche angeordnet werden, um eine ausreichend wirkungsvolle Lichteinkopplung in den Lichtleiter zu gewährleisten. Dabei weisen diese Bauteile des Standes der Technik plane oder gekrümmte Flächen auf, um die Einkopplung des Lichtes in den Lichtleiter zu ermöglichen.

Schließlich sind optische Elemente wie Lichtleitstab oder Lichtleitkegel oder auch faseroptischer Kegel bekannt, um bei LED-Lichtquellen mit Halbleiterflächen, welche aus einer Kombination von verschiedenfarbig monochromatisch emittierenden Halbleitern bestehen, das farbige Licht ausreichend zu mischen. Diese als Nahfeldmischung bekannte Wirkung ist deshalb erforderlich, da die Licht emittierende Halbleiterfläche im Nahbereich in verschiedene Farbbereiche aufgeteilt ist. Jeder dieser Farbbereiche wird bei unmittelbarer Einkopplung in den Lichtleiter auf einen Teilbereich der Eintrittsfläche abgebildet und entsprechend im Lichtleiter geleitet. Hierdurch werden auf der Auskoppelseite des Lichtleiters auf Grund physikalischer Gesetzmäßigkeiten optische Effekte bewirkt, welche unerwünscht sind. Hierzu zählen Ringverteilung des Lichts unterschiedlicher Wellenlängen, Aberrationen, Auslöschungen, Interferenzen und dergleichen. Durch solche optischen Effekte gehen auf der Ausgangsseite des Lichtleiters bei der Weiterverarbeitung des Lichts erhebliche Leistungsverluste einher.

Vorgenannte Verfahren und Vorrichtungen des Standes der Technik erfordern zudem stets speziell an die LED-Lichtquelle angepasste Verbindungsweisen zwischen LED und Eintrittsfläche des Lichtleiters. Zudem sind LED-Lichtquellen mit einer größeren Anzahl an Licht emittierenden Halbleiterflächen sowie mit unterschiedlichen Farbbereichen nur mit besonderen Verfahren und diesbezüglichem technischen Aufwand sowie hohen Kosten realisierbar.

Ein Beispiel für eine solche bekannte Vorrichtung ist mit der EP 1007993 veröffentlicht worden. Dabei wird das Licht von zwei LED-Lichtquellen mittelbar über einen halbdurchlässigen Spiegel auf die Eingangsseite einer Monomodefaser abgebildet. Die Linsenanordnung ist mit sphärischen Linsen und als Spritzgussteil in Form einer Aufsatz-Optik ausgeführt. Nachteil dieser Ausführungsformen ist es, dass die Vorrichtung ausschließlich für einen Typ einer LED-Lichtquelle vorgesehen ist. Eine Verwendung anderer Typen von LED-Lichtquellen ist im Allgemeinen nicht möglich. Das bedeutet, dass die Vorrichtung nur solange benutzt beziehungsweise gewartet werden kann, solange der spezielle Typ der dafür vorgesehenen LED-Lichtquelle hergestellt wird. Dies führt dazu, dass der Einsatz der Vorrichtungen des Standes der Technik in langlebigen Produkten unzweckmäßig oder unwirtschaftlich ist.

Aufgabe der Erfindung ist es somit eine Vorrichtung zur Verfügung zu stellen,
- wobei die Einkopplung von LED-Licht in einen Lichtleiter hinsichtlich technischem Aufwand und Wirkungsgrad sowie wirtschaftlicher Kosten optimiert ist,
- wobei das Licht verschiedener Typen von LED-Lichtquellen in gleicher Weise einsetzbar ist
- und womit unerwünschte optische Effekte bei der Lichtübertragung vermieden werden.

Eine Lösung wird erfindungsgemäß mit einer Vorrichtung nach Anspruch 1 bereitgestellt. Vorteilhafte Ausführungsformen sind durch die Merkmale der Unteransprüche gekennzeichnet.

Erfindungsgemäß ist vorgesehen, dass die Linsenanordnung wenigstens zwei aspherische Linsen umfasst, mit wenigstens einer Eingangslinse und einer demgegenüber im Durchmesser vergrößerten Ausgangslinse, und dass jeder Licht emittierenden Halbleiterfläche eine Eingangslinse zugeordnet ist.

In vorteilhafter Weise wird somit eine Vorrichtung bereitgestellt, welche unabhängig von den verwendeten LED-Typen als Kondensor einsetzbar ist. Dies bedeutet, dass weder Bauform der LED-Lichtquelle, beispielsweise mit oder ohne Primärlinsentechnologie, noch die Größe der LED im Gegensatz zu bekannten Vorrichtungen speziell auf den Kondensortyp angepasst sein müssen. Eine bevorzugte Vorrichtung weist dabei einen Kondensor auf, welcher dadurch gekennzeichnet ist, dass der Abstand x zwischen vorderem Scheitelpunkt und Eingangsbrennpunkt der Eingangslinse kleiner ist als der Abstand x' zwischen hinterem Scheitelpunkt und Ausgangsbrennpunkt der Ausgangslinse. Dies gewährleistet, dass die aus der Eingangslinse kommenden divergenten Strahlen vollständig erfasst wird und somit die optimale Lichtleistung für die Einspeisung in den Lichtleiter zur Verfügung steht. Mit der erfindungsgemäßen Vorrichtung wird in vorteilhafter Weise die Verwendung von LED-Licht zusammen mit einem faseroptischen Lichtleiter verbessert, weil damit insbesondere bei der Einkoppelung des LED-Lichts in den Lichtleiter Verluste im Verhältnis zu bekannten Anordnungen weitgehend vermieden werden können.

Eine besonders günstige Ausführungsvariante wird erfindungsgemäß dadurch zur Verfügung gestellt, dass die Eingangsbrennweite der Ausgangslinse größer ist als ihre Ausgangsbrennweite. Hierdurch wird der Strahlengang so fokussiert, dass der Einkoppelwinkel in den Lichtleiter optimal für die Einkopplung des Lichts ausgerichtet ist. Ein geringer Abstand der Licht emittierenden Halbleiterfläche zur Planfläche der Eingangslinse gewährleistet zudem einen Erfassungsbereich des Lichtleiters über den gesamten Bereich des optimierten Raumwinkels. Erfindungsgemäß ist hierzu als vorteilhaft gefunden worden, dass das Abbildungsverhältnis v der Linsenanordnung zwischen 1:2,4 und 1:2,2 liegt, vorzugsweise v=1:2,3 beträgt.

Eine vorteilhafte Ausführungsvariante wird dadurch zur Verfügung gestellt, dass die Eingangslinse einen Eingangswinkel ⊖_{E} zur Aufnahme des Lichts der Halbleiterfläche im Bereich zwischen 110° und 130° gewährleistet, vorzugsweise ⊖_{E} = 120°. Ergänzend oder alternativ ist erfindungsgemäß vorgesehen, dass die Ausgangslinse der Linsenanordnung das Licht aller Halbleiterflächen mit einem Winkel ⊖_{A} im Bereich zwischen 65° und 75° auf die Eintrittsfläche des Lichtleiters fokussiert, vorzugsweise mit einem Winkel ⊖_{A} = 70°. In vorteilhafter Weise wird erfindungsgemäß eine Vorrichtung bereitgestellt, bei welcher die Einkopplung von LED-Licht in einen Lichtleiter hinsichtlich technischem Aufwand und Wirkungsgrad sowie der wirtschaftlichen Kosten optimiert ist. Außerdem ist bei der erfindungsgemäßen Vorrichtung von Vorteil, dass das Licht verschiedener Typen von LED-Lichtquellen in gleicher Weise einsetzbar ist.

Die erfindungsgemäße Vorrichtung ermöglicht es somit bekannte Lichtquellen zu ersetzen, wo üblicherweise andere Lichterzeugungstechniken zum Einsatz gekommen sind, wie beispielsweise Halogen- und Gasentladungslampen. Damit kann für die typischen Anwendungsgebiete eine längere Lebensdauer der damit bestückten Systeme erzielt werden, als auch die Energieeffizienz gegenüber bekannten Lichtquellen verbessert werden, ohne dass die nachteiligen optische Effekte, welche bei Einkopplung des Lichts in den Lichtleiter ansonsten entstehen, in Kauf genommen werden müssen. Somit ist zudem möglich, LED-Lichtquellen zu verwenden, wenn veränderbar farbiges Licht erzeugt werden soll.

Von besonderem Vorteil hat sich erwiesen, dass es mit der erfindungsgemäßen Vorrichtung möglich ist, LED-Licht mit Hilfe von faseroptischen Lichtleitern über große Distanzen zu leiten. Die optimale Ausnutzung der Lichtleistung der LED-Lichtquelle gewährleistet, dass das LED-Licht zum Beleuchtungsort weitgehend verlustfrei geleitet wird. Der faseroptische Lichtleiter umfasst dabei eine Vielzahl von optischen Einzelfasern, welche vorzugsweise als Glasfasern ausgeführt sind. Andere faseroptische Materialien sind erfindungsgemäß ebenfalls einsetzbar und dementsprechend vom Gegenstand der Erfindung umfasst. Dabei bilden diese Einzelfasern an dem für die Einkopplung vorgesehenen Lichtleiterende eine Eintrittsfläche für das Licht. Mit der Erfindung wird somit gewährleistet, dass bei der Lichteinkopplung und Übertragung im faseroptischen Lichtleiter optimale Lichtqualität am Lichtleiterausgang zu Verfügung steht.

Erfindungsgemäß ist vorgesehen, dass für die Aufnahme des Lichts in die Linsenanordnung für jede Licht emittierenden Halbleiterfläche der LED-Lichtquelle jeweils eine Eingangslinse vorgesehen ist. In diesem Zusammenhang wird als LED-Lichtquelle eine Leuchtdiode oder eine Anordnung von Leuchtdioden verstanden. Dabei weist die LED-Lichtquelle wenigstens eine emittierende Halbleiterfläche auf. Die LED-Lichtquelle kann dabei sowohl weißes Licht als auch Farblicht emittieren. Außerdem sind von der Erfindung LED-Lichtquellen umfasst, deren Halbleiterflächen das Licht in einem spektralen Bereich (monochromatisch) emittieren. Ebenso sind LED-Lichtquellen von der Erfindung umfasst, deren Licht von einer Kombination von verschiedenen, monochromatisch emittierenden Halbleiterflächen ausgestrahlt wird. Es sind dabei unter anderem Kombinationen von Halbleiterflächen vorgesehen, bei denen die Mischung des Lichts der monochromatisch emittierenden Halbleiterflächen, Farbeffekte bei Fernfeldbetrachtung erzeugen kann. Alternativ ist vorgesehen, dass die LED eine Licht emittierende Halbleiterfläche aufweist und dass Eingangs- und Ausgangslinse der Linsenanordnung eine optische Achse bilden, auf welcher die Halbleiterfläche und die Eintrittsfläche des Lichtleiters angeordnet sind. Mit der erfindungsgemäßen Anordnung der einzelnen Komponenten der faseroptischen Vorrichtung werden darüber hinaus in vorteilhafter Weise unerwünschte optische Effekte bei der Lichtübertragung vermieden, welche den Wirkungsgrad der Lichteinkopplung reduzieren würden.

Hierzu hat sich erfindungsgemäße als vorteilhaft erwiesen, dass die LED-Lichtquelle mehr als eine Licht emittierende Halbleiterfläche aufweist und dass die Halbleiterflächen mit den zugeordneten Eingangslinsen eine symmetrische Anordnung im Bezug auf die durch die Ausgangslinse festgelegte, optische Achse aufweisen.

Eine besonders bevorzugte Ausführungsvariante wird dadurch zur Verfügung gestellt, dass eine Eingangslinse zentriert auf der durch die Ausgangslinse festgelegten, optischen Achse angeordnet ist.

Alternativ oder ergänzend ist dazu erfindungsgemäß vorgesehen, dass jede der Licht emittierenden Halbleiterflächen in verschiedene Farbbereiche mit identischer Farbanordnung unterteilt ist, dass die Halbleiterflächen mit den zugeordneten Eingangslinsen eine symmetrische Anordnung um die optische Achse aufweisen und dass die Anordnung der Farbbereiche jeder Halbleiterfläche in Bezug auf die optische Achse identisch ist.

Eine weitere Ausführungsvariante wird dadurch zur Verfügung gestellt, dass die Anzahl der um die optische Achse angeordneten Halbleiterflächen das ein- oder mehrfache der Anzahl der Farbbereiche der Halbleiterflächen beträgt. Dabei hat sich als vorteilhaft erwiesen, dass die Halbleiterflächen vier Farbbereiche mit je zwei gleichen und zwei unterschiedlichen Farben aufweisen, vorzugsweise der Farben Rot (R), Grün (G) und Blau (B), und dass jedem der beiden unterschiedlichen Farbbereiche zwei Farbbereiche derselben Farbe benachbart sind.

Eine weitere Ausführungsvariante ist erfindungsgemäß dadurch vorgesehen, dass die Halbleiterflächen Farbbereiche mit im wesentlichen quadratischer Form aufweisen und dass die Farbbereiche mit unterschiedlichen Farben rotes (R) und blaues (B) Licht emittieren und die beiden Farbbereiche mit gleicher Farbe grünes (G) Licht emittieren.

Mit der Anordnung der Farbbereiche und der zugeordneten optischen Linsen wird erfindungsgemäß gewährleistet, dass Farbwirkungen, welche in Fernfeldbetrachtung entstehen, über die Linsenanordnung und den Lichtleiter nicht durch unerwünschte optische Effekte zerstört werden, sondern vor der Einkopplung des Lichts in den Lichtleiter bereits eine ausreichende Lichtmischung erzeugt wird, welche eine optimale Lichtübertragung gewährleistet.

Vorteilhaft hat sich des Weiteren erwiesen, dass die optischen Flächen der Vorrichtung entspiegelt sind. Hiermit werden Reflexionen verhindert, welche den Wirkungsgrad der Lichteinkopplung negativ beeinflussen könnten.

Eine weitere Optimierung der Einkopplung von Licht in den Lichtleiter wird mittels der erfindungsgemäßen Vorrichtung dadurch erreicht, dass die optischen Fasern des Lichtleiters an der Eintrittsfläche heißverschmolzen, verklebt und/oder in einer Abschlusshülse eingepresst sind. Dies gewährleistet, dass die optischen Eigenschaften der Flächen im Strahlengang optimal für den Lichteintritt beziehungsweise Lichtaustritt zur Verfügung stehen.

Mit der Erfindung wird somit eine Vorrichtung zur Verfügung gestellt, bei welcher durch die optischen Randbedingungen der LED-Lichtquelle und die des Linsensystems der Wirkungsgrad der Lichteinkopplung in den Lichtleiter optimiert ist. Gleichzeitig ist mit den optischen Randbedingungen des faseroptischen Lichtleiters beziehungsweise seiner Eintrittsfläche eine Optimierung des Wirkungsgrades erreicht, so dass die Licht erzeugende Fläche im Verhältnis zur Eintrittsfläche des Lichtleiters klein ist. Damit wird verhindert, dass der vom Lichtleiter vorgegebene Raumwinkel für die Erfassung des insgesamt zur Verfügung stehenden Lichts von der Linsenanordnung überschritten wird. In Folge dessen werden Lichtverluste vermieden.

Von besonderem Vorteil hat sich erwiesen, dass die erfindungsgemäße Vorrichtung sowohl bei einer Anordnung einfacher Licht emittierender Halbleiterflächen einsetzbar ist, als auch bei LED-Lichtquellen, welche Primärlinse an den Halbleiterflächen aufweisen. Es sind darüber hinaus alle alternativen oder ergänzenden Kopplungstechniken anwendbar, so dass die erfindungsgemäße Vorrichtung universell in unterschiedlichen LED-Systemen einsetzbar ist.

Des Weiteren können die aus dem Stand der Technik bekannten Kunststoffspritzgussteile, welche als sogenannte LED-Aufsatzoptik eingesetzt werden, weiterhin verwendet werden, so dass entsprechende Kosten für Umrüstung eingespart werden können.

Schließlich bleiben erfindungsgemäß optische Elemente wie Lichtleitstab oder Lichtleitkegel oder auch faseroptische Kegel weiterhin einsetzbar, ohne dass es speziell an die LED-Lichtquelle angepasste Verbindungsweisen zwischen LED und Eintrittsfläche des Lichtleiters bedarf.

Eine weitere bevorzugte Ausführungsvariante der erfindungsgemäßen Vorrichtung wird dadurch zur Verfügung gestellt, dass unmittelbar vor der Eintrittsfläche des Lichtleiters ein zusätzliches optisches Element mit negativer Brennweite eingefügt ist, welches das Licht in einem Winkel ablenkt, der mit der Abbildung der Grenzbereiche zwischen den Licht emittierenden Halbleiterflächen im Raumwinkel der Ausgangslinse in der Weise korrespondiert, dass die Ablenkung Helligkeitsunterschiede auf der Eintrittsfläche des Lichtleiters ausgleicht. Es ist erfindungsgemäß erkannt worden, dass bei der Einkopplung von Licht einer LED-Lichtquelle mit mehreren Licht emittierenden Halbleiterflächen, aufbaubedingt in einem Winkelbereich der Abbildung durch die Ausgangslinse hellere und dunklere Bereiche gibt. Diese helleren und dunkleren Bereiche des Winkelbereichs korrespondieren mit den Grenzbereichen der Licht emittierenden Halbleiterflächen, da an den Grenzen der Halbleiterflächen weniger oder überhaupt kein Licht emittierendes Material vorhanden ist. Je größer der Abstand der Licht emittierenden Halbleiterflächen voneinander, desto größer ist auch der Winkelbereich, in welchem kein beziehungsweise weniger Licht vorhanden ist. Das bedeutet, dass es bei der Abbildung des Lichts durch die Ausgangslinse ebenfalls hellere und dunklere Bereiche gibt. Mit der erfindungsgemäßen Vorrichtung wird das von der Ausgangslinse auf die Eintrittsfläche des Lichtleiters gestrahlte Licht mit einem zusätzlichen optischen Element negativer Brennweite in vorteilhafter Weise im Raumwinkel abgelenkt. Dabei werden die helleren und dunkleren Bereiche überlagert, bevor das Licht auf die Eintrittsfläche des Lichtleiters trifft. In vorteilhafter Weise wird so das übertragene Licht ohne Bereiche unterschiedlicher Helligkeit mit weitgehend homogener Lichtverteilung in den Lichtleiter eingekoppelt, so dass unerwünschte optische Effekte wie beispielsweise Hell-/Dunkelbereiche oder Ringe auf der Auskoppelseite des Lichtleiters vermieden werden.

Das optische Element negativer Brennweite ist dabei in unmittelbarer Nähe vor der Eintrittsfläche des Lichtleiters angeordnet und weist eine negative Brennweite auf, welche mit der Anordnung und Anzahl der Grenzbereiche zwischen den Licht emittierenden Halbleiterflächen der LED-Lichtquelle korrespondiert. Dabei korreliert die mit dem optischen Element erreichbare Ablenkung des Lichts unmittelbar mit den im Winkelbereich der Abbildung der Ausgangslinse entstehenden Hell-/Dunkelbereiche, so dass sich die Hell-/Dunkelbereiche optimal überlagern. Von Vorteil ist dabei, dass eine homogene Lichteinkopplung in den Lichtleiter und demgemäß eine homogene Lichtabstrahlung am Ausgang des Lichtleiters erzeugt wird.

Die Erfindung wird im Folgenden anhand der Zeichnung erläutert. Es zeigen
Figur 1 eine Prinzipdarstellung des Aufbaus einer LED-Lichtquelle mit einer Licht emittierenden Halbleiterfläche;
Figur 2 eine erfindungsgemäße Vorrichtung in Querschnittsansicht mit einer Licht emittierenden Halbleiterfläche und asymmetrischer Linsenanordnung sowie Lichtleiter;
Figur 3a eine Prinzipdarstellung des Aufbaus einer LED-Lichtquelle mit vier Licht emittierenden Halbleiterflächen, welche unterschiedliche Farbbereiche aufweisen;
Figur 3b eine erfindungsgemäße Vorrichtung mit LED-Lichtquelle gemäß Fig. 3a in Querschnittsansicht mit symmetrischer Linsenanordnung;
Figur 4a eine Prinzipdarstellung der erfindungsgemäßen Vorrichtung in Querschnittsansicht ohne zusätzliches optisches Element negativer Brennweite;
Figur 4b eine Prinzipdarstellung gemäß Fig. 4a mit zusätzlichem optischen Element negativer Brennweite.

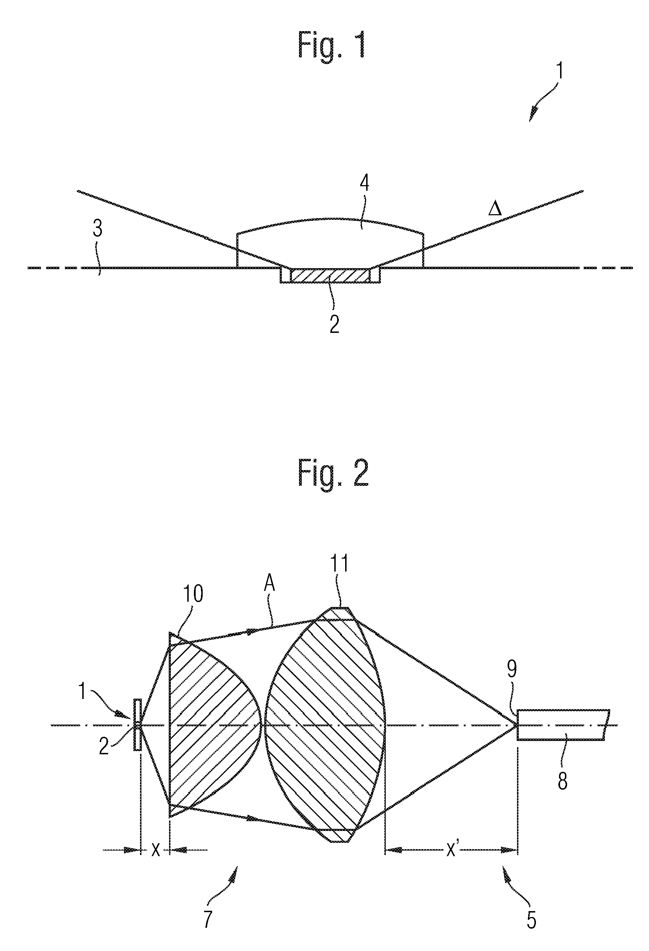

Figur 1 zeigt eine Prinzipdarstellung des Aufbaus einer LED-Lichtquelle 1 des Standes der Technik mit einer Licht emittierenden Halbleiterfläche 2. Die Licht emittierende Halbleiterfläche 2 ist in einer Platine 3 aufgenommen. Der Raumwinkelbereich Δ, in welchen die Halbleiterfläche 2 Licht emittiert, hängt im Wesentlichen von der Anordnung der Halbleiterfläche 2 auf der Platine 3 ab. Bei einfachen LED-Platinen erstreckt sich dieser über den gesamten Halbraum um die Halbleiterfläche 2.

Bei einer Einkopplung in einen Lichtleiter wird daher regelmäßig nur ein Teil des emittierten Lichts aufgenommen. Somit werden erhebliche Verluste an Lichtleistung bei der Einkopplung in den Lichtleiter erzeugt.

Um diese Verluste zu reduzieren wird im Stand der Technik, wie in der Zeichnung gezeigt, eine Primärlinsen 4 auf der Halbleiterfläche 2 angeordnet, welche den Strahlengang auf einen kleineren Raumwinkel Δ beschränken sollen. Diese Maßnahme ist zwar wirkungsvoll, sie reicht aber für die Verwendung von LED-Lichtquellen für die Übertragung von Licht in faseroptischen Lichtleitern nicht aus, um eine ausreichende Helligkeit für die gewünschten Lichtapplikationen am Lichtleiterende zu gewährleisten, da der Lichtleiter seinerseits als optisches Element eigene optische Gesetzmäßigkeiten erfordert.

So weist ein faseroptischer Lichtleiter einen Öffnungswinkel auf, welcher typischerweise etwa 70° beträgt. Die Gesetzmäßigkeit optischer Abbildungen nach der optischen Invariante erfordert, dass das Produkt aus der Fläche des leuchtenden Mediums im Objektraum und sein Raumwinkel im Objektraum kleiner oder gleich ist dem Produkt der Fläche des leuchtenden Mediums im Bildraum und seinem Raumwinkel im Bildraum. Danach ist das Flächenverhältnis reziprok zum Raumwinkelverhältnis. Bei dem Öffnungswinkel für Lichtleiter ist das Verhältnis etwa 1:6, das heißt, dass die Eintrittsfläche des Lichtleiters etwa 6 mal größer sein müsste als die Licht emittierende Halbleiterfläche. Insbesondere bei mehreren nebeneinander angeordneten Halbleiterflächen führt dies zu Dimensionen für den Lichtleiter, welche wirtschaftlich und technisch unzweckmäßig sind.

Hinzu kommt, dass LED-Lichtquellen in der Regel aus mehreren Licht emittierenden Halbleiterflächen 2 bestehen, wie in den nachfolgenden Figuren gezeigt ist, damit die erforderliche Lichtleistung erzeugt werden kann. Darüber hinaus sollen auch LED-Lichtquellen mit Farbwirkung einsetzbar sein. Die Farbwirkung wird dabei mit mehreren nebeneinander angeordneten Halbleiterflächen 2 mit verschiedenen Farbbereichen erzeugt. Durch die Anordnung verschiedener Halbleiterflächen 2 nebeneinander und mit unterschiedlichen Farbbereichen entstehen weitere optische Effekte, welche die Lichtleistung und die Lichtwirkung negativ beeinflussen können.

Beim Abbilden bzw. Einkoppeln des Lichtes in den Lichtleiter werden diese verschiedenen Halbleiterflächen oder unterschiedlichen Farbbereiche auf die Eintrittsfläche des Lichtleiters abgebildet. Das führt dazu, dass die einzelnen Fasern des Lichtleiters unterschiedliche Lichtanteile führen. Bei farbigen LED-Lichtquellen mit roten, grünen und blauen Lichtanteilen führen bestimmte Fasern rotes, andere grünes und wieder andere blaues Licht. Im Falle eines mehrarmigen, ungemischten Lichtleiters führt dies dazu, dass von den einzelnen Lichtleiterarmen entsprechende Farbanteile an unterschiedliche Orte geleitet werden, was in der Regel nicht gewünscht ist.

Eine Mischung der Fasern im Lichtleiter müsste einkoppelseitig sehr fein vorgenommen werden, um diesen Mangel seitens des Lichtleiters zu beheben. Diese Feinmischung müsste sehr kontrolliert erfolgen und dürfte keine zufälligen Häufungen von Lichtleitfasern zulassen. Eine solche Feinmischung ist erheblich aufwendig und entsprechend kostenintensiv.

Faseroptische Lichtleiter haben außerdem die Eigenschaft, dass sie in gewissem Maße winkeltreu sind. Das heißt, dass die einkoppelseitig vorliegende Winkelverteilung sich im wesentlichen auch auf der Auskoppelseite des Lichtleiters wiederfindet.

Eine gewisse "Mischung" findet schon statt, allerdings liegt eine rotationssymmetrische Verteilung vor. Werden nun aufgrund der Einkoppelverhältnisse, beispielsweise bei RGBfarbiger Lichteinkopplung die verschiedenen Farben, in verschiedene Winkelbereiche in den Lichtleiter eingekoppelt, so ergibt sich auskoppelseitig eine farbige Ringstruktur im Fernfeld. Diese ist in der Regel nicht gewünscht. Das Mischen der Fasern beeinflusst diese Struktur nicht.

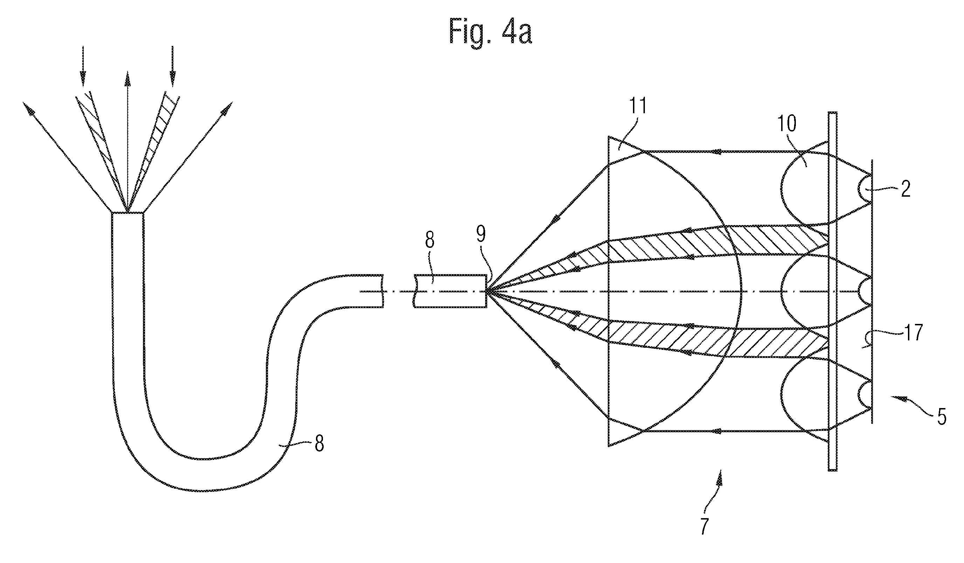

Die gleiche Wirkung wird an den Grenzen der Halbleiterflächen erzeugt, wo kein oder nur wenig Licht emittiert wird. Auch diese Strukturen mit unterschiedlicher Helligkeit erzeugen am Lichtaustrittsende entsprechende Effekte, welche nicht gewünscht sind, wie nachfolgend zu Figur 4a näher beschrieben ist.

Figur 2 zeigt demgemäß eine erfindungsgemäße faseroptische Vorrichtung 5 in Querschnittsansicht mit einer LED-Lichtquelle 1 mit einer Licht emittierenden Halbleiterfläche 2 und asymmetrischer Linsenanordnung 7 sowie einem Lichtleiter 8.

Der faseroptischen Lichtleiter 8 besteht aus einer Vielzahl von optischen Einzelfasern, die an einem Ende zu einer Licht aufnehmende Eintrittsfläche 9 zusammengefasst sind. Die Linsenanordnung 7 ist der Halbleiterfläche 2 und der Eintrittsfläche 9 unmittelbar zugeordneten und weist optischen Linsen auf, welche das Licht der LED-Lichtquelle 1 auf die Eintrittsfläche 9 abbilden.

Die Linsenanordnung 7 umfasst erfindungsgemäß zwei aspherische Linsen. Dabei wird die der Halbleiterfläche 2 zugeordnete Linse als Eingangslinse 10 und die dem Lichtleiter zugeordnete Linse als Ausgangslinse 11 bezeichnet. Die Ausgangslinse 11 ist gegenüber der Eingangslinse 10 im Durchmesser vergrößert.

Der Strahlengang des Lichts ist mittels Pfeil A symbolisiert.

Bei der erfindungsgemäßen Vorrichtung 5 sind die Linsen so angeordnet, dass der Abstand x zwischen vorderem Scheitelpunkt und Eingangsbrennpunkt der Eingangslinse 10 kleiner ist als der Abstand x' zwischen hinterem Scheitelpunkt und Ausgangsbrennpunkt der Ausgangslinse 11. Des Weiteren ist die Eingangsbrennweite der Ausgangslinse 11 größer als ihre Ausgangsbrennweite.

Es ist somit in vorteilhafter Weise möglich, das in den Raumwinkel der Licht emittierenden Halbleiterflächen 2 gestrahlte Licht vollständig auf die Eintrittsfläche 9 abzubilden, wobei der Öffnungswinkel des Lichtleiters berücksichtigt wird. Es kann mithin darauf verzichtet werden, den Lichtleiterdurchmesser an die Licht emittierende Halbleiterfläche 2 anzupassen. Der große Raumwinkel der LED-Lichtquelle 1 wird somit vollständig erfasst, so dass das Licht in den kleinen Öffnungswinkel und auf die Eintrittsfläche 9 des Lichtleiters 8 einkoppelbar ist.

Es werden somit nicht nur die Randbedingungen der optischen Eigenschaften der Lichtquelle 1 oder des Lichtleiters 8 bei der Einkopplung des Lichts berücksichtigt, sondern auch die Wechselwirkung der beiden optischen Systeme.

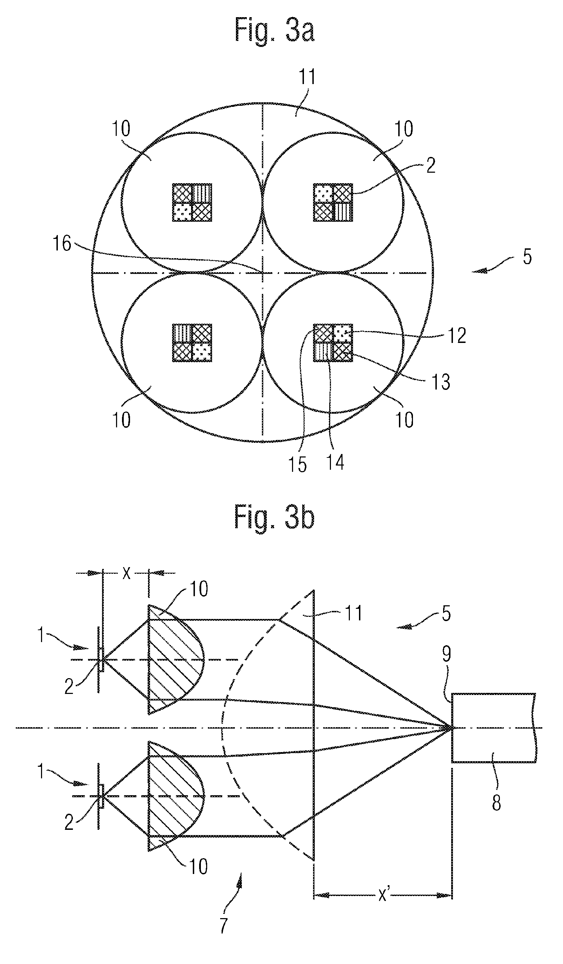

In Figur 3a ist eine Prinzipdarstellung des Aufbaus einer LED-Lichtquelle 1 in Zusammenhang mit der Erfindung in Draufsicht dargestellt. Die LED-Lichtquelle 1 weist vier Licht emittierenden Halbleiterflächen 2 auf. Dabei sind die Licht emittierenden Halbleiterflächen 2 mit unterschiedliche Farbbereichen 12, 13, 14, 15 versehen. Für die Aufnahme des Lichts ist in der Linsenanordnung 7 für jede Licht emittierenden Halbleiterfläche 2 der LED-Lichtquelle 1 jeweils eine Eingangslinse 10 vorgesehen. Die Halbleiterflächen 2 bilden mit den zugeordneten Eingangslinsen 10 eine symmetrische Anordnung in Bezug auf die durch die Ausgangslinse 11 festgelegte, optische Achse 16. Die Ausgangslinse 11 wird in der Figur mit dem äußeren Umfangskreis dargestellt. Die optische Achse 16 ist demgemäß senkrecht zur Bildebene durch den Kreismittelpunkt des äußeren Umfangskreises zu denken. Die Eingangslinsen 10 sind gleichmäßig um die optische Achse 16 angeordnet.

Jede der Licht emittierenden Halbleiterflächen 2 ist in verschiedene Farbbereiche 12, 13, 14, 15 mit identischer Farbanordnung unterteilt, was in der Zeichnung mit unterschiedlicher Schraffur deutlich gemacht ist. Die Halbleiterflächen 2 bilden dabei mit den zugeordneten Eingangslinsen 10 eine symmetrische Anordnung um die optische Achse 16. Die Anordnung der Farbbereiche 12, 13, 14, 15 jeder Halbleiterfläche 2 ist in Bezug auf die optische Achse 16 identisch. Das bedeutet, dass eine Halbleiterfläche 2 zu den am nächsten benachbarten Halbleiterflächen 2 jeweils um 90° zueinander gedreht angeordnet ist.

Die Anzahl der um die optische Achse 16 angeordneten Halbleiterflächen 2 ist gleich der Anzahl der Farbbereiche einer Halbleiterfläche 2. Mit der Erfindung sind jedoch auch Anordnungen beansprucht, bei denen die Anzahl der Halbleiterfläche 2 ein Vielfaches der Anzahl der Farbbereiche einer Halbleiterfläche 2 beträgt. Die Erfindung umfasst darüber hinaus auch Anordnungen, bei denen die Anzahl der Halbleiterflächen 2 unabhängig von der Anzahl der Farbbereichen gewählt ist, insbesondere Anordnungen mit Halbleiterflächen 2, welche unterschiedliche oder verschiedenfarbige Farbbereiche aufweisen.

Es hat sich eine bevorzugte Ausführungsvariante als besondere vorteilhaft erwiesen. Bei dieser Ausführungsvariante weisen die Halbleiterflächen 2 vier Farbbereiche mit je zwei gleichen und zwei unterschiedlichen Farben auf. Dabei umfassen diese Farbbereiche vorzugsweise die Farben Rot (R), Grün (G) und Blau (B). Dabei ist vorgesehen, dass die Halbleiterflächen Farbbereiche mit im wesentlichen quadratischer Form aufweisen. Als besonders vorteilhaft hat sich die Kombination erwiesen, bei welcher die Farbbereiche mit unterschiedlichen Farben rotes (R) beziehungsweise blaues (B) Licht emittieren und die beiden Farbbereiche mit gleicher Farbe grünes (G) Licht emittieren.

In Figur 3b ist die erfindungsgemäße Vorrichtung 5 mit LED-Lichtquelle 1 gemäß Fig. 3a in Querschnittsansicht von der Seite gezeigt. Die Linsenanordnung 7 zeigt zwei der Halbleiterflächen 2, denen entsprechende Eingangslinsen 10 zugeordnet sind. Die Eingangslinsen 10 korrespondieren in Abhängigkeit von der optischen Achse 16 mit der Ausgangslinse 11, welche im Umfang größer ist als jede der Eingangslinsen 10. Die Eingangsbrennweite x der Eingangslinsen 10 ist darüber hinaus kleiner als die Ausgangsbrennweite x' der Ausgangslinse 11. Das Licht wird somit in einem optimalen Raumwinkel in den Lichtleiter 8 eingekoppelt. Der Raumwinkel ist vorzugsweise gleichgroß wie der Öffnungswinkel des Lichtleiters 8 an der Lichteintrittsfläche 9.

Figur 4a zeigt eine Prinzipdarstellung der erfindungsgemäßen Vorrichtung 5 in Querschnittsansicht ohne zusätzliches optisches Element 6 negativer Brennweite. Dabei wird das Licht der LED-Lichtquelle 1 über die Linsenanordnung 7 auf die Eintrittsfläche 9 des Lichtleiters 8 abgebildet. Ebenso wie das Licht der Halbleiterflächen 2 werden dabei die Grenzflächen 17 zwischen den Halbleiterflächen 2 abgebildet. Bei der Übertragung des Lichts im Lichtleiter 8 entstehen somit die bekannten physikalischen Effekte, nämlich dass die Grenzbereiche mit geringerer Helligkeit nunmehr am Lichtaustrittsende des Lichtleiters 8 als dunkle Ringe erscheinen.

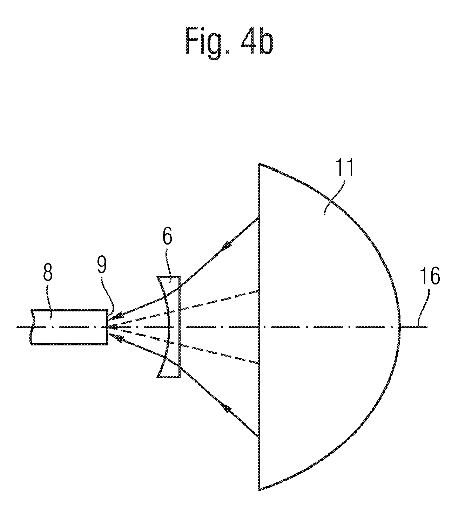

Es zeigt weiter Figur 4b eine Prinzipdarstellung der Anordnung der Ausgangslinsen 11 der erfindungsgemäßen Vorrichtung 5 gemäß Fig. 4a mit zusätzlichem optischen Element 6 negativer Brennweite. Die in Fig. 4a dargestellte Vorrichtung 5 weist die LED-Lichtquelle 1 auf, bei welcher zwischen den Halbleiterflächen 2 Grenzbereiche geringerer Helligkeit vorkommen, mit den vorbeschriebenen Nachteilen. Erfindungsgemäß ist zur Vermeidung dieser Nachteile unmittelbar vor der Eintrittsfläche 9 des Lichtleiters vorgesehen, ein zusätzliches optisches Element 6 negativer Brennweite anzuordnen. Das Licht wird damit vor der Abbildung auf der Eintrittsfläche 9 abgelenkt, so dass sich die Bereiche unterschiedlicher Helligkeit oder Farbe bei der Abbildung auf der Eintrittsfläche 9 des Lichtleiters 8 überlagern.

Auf diese Weise wird erreicht, dass am Lichtaustrittsende des Lichtleiters 8 eine homogene Lichtabstrahlung gewährleistet ist. Durch das zusätzliche optisches Element 6 negativer Brennweite werden Abbildungsstrukturen, die durch die baubedingte Konstruktion der LED-Lichtquelle 1 und der Linsenanordnung 7 bedingt sind, weitgehend ausgeglichen, was für die meisten Anwendungsfälle der erfindungsgemäßen Vorrichtung von Vorteil ist.

In vorteilhafter Weise wird mit der Erfindung eine Vorrichtung zur Verfügung gestellt, welche mit anderen Einkoppelarten korrespondiert. So sind Kombinationen der erfindungsgemäßen Linsenanordnung mit weiteren, bereits bekannten Methoden möglich. Es sind insbesondere weiterhin Kunststoffspritzteile als LED Aufsatzoptiken möglich. Die Verwendung von einem Lichtleitstab oder Lichtleitkegel bleibt ebenfalls mit der Erfindung möglich. Auch können gängige Prinzipien zur Einkopplung von LED-Licht in den faseroptischen Lichtleiter weiterhin zur Verbesserung der Abbildung des Lichts auf der Eintrittsfläche 9 des Lichtleiters 8 eingesetzt werden.

Die Erfindung hat den Vorteil, dass ein Abbildungsmaßstab von 1:2,3 von Eingangsabbildung zur Ausgangsabbildung erzeugt wird. Damit wird die Diagonale einer Halbleiterfläche 2 auf die doppelte Größe abgebildet. Außerdem wird mit der Linsenanordnung einen großer Raumwinkel erfasst, so dass neben geringen Verlusten auf Grund von Materialeigenschaften im Wesentlich die gesamte Lichtleistung der Halbleiterflächen 2 und somit der LED-Lichtquelle 1 in den Lichtleiter 8 einkoppelbar ist.

Ein geringer Abstand zwischen LED-Lichtquelle 1 und Linsenanordnung 7 ist durch Wahl geeigneter Linsentypen für die Eingangslinsen 11 realisierbar.

Erfindungsgemäß weist die zur Verfügung gestellte Vorrichtung eine Linsenanordnung mit mehr als eine Linse auf, um den geometrisch-optischen Randbedingungen Rechnung zu tragen.

Sowohl bei weißen als auch bei monochromatischen Halbleiterflächen 2 lässt sich die erfindungsgemäße Vorrichtung mit nur zwei Linsen und in symmetrischer Anordnung realisieren.

Um größere Raumwinkel zu erfassen und außerdem das gewünschte Abbildungsverhältnis von 1:2,3 zu realisieren, wird eine asymmetrische Anordnung vorgeschlagen.

Der maßgebliche Vorteil der Erfindung ist dabei, dass die Linsenanordnung gegenüber bekannten Vorrichtungen nicht LED-spezifisch ist, das heißt sowohl die Bauform (z.B. mit oder ohne Primärlinse) als auch die Größe der LED-Lichtquelle kann weitest gehend beliebig sein.

Die erfindungsgemäße Vorrichtung kann weiter optimiert werden, in dem mit einer Breitbandentspiegelung die optischen Oberflächen der Vorrichtung verbessert werden, so dass eine höhere Transmission ermöglicht wird.

Eine weitere Möglichkeit die Effizienz zu erhöhen besteht in der Verwendung eines Lichtleiters 8 mit heiß verschmolzenen, anstatt verklebten Eintrittsfläche 9. Damit weist die Eintrittsfläche 9 eine höhere Packungsdichte der Fasern auf, womit eine verbesserte Oberfläche für den Lichteintritt zur Verfügung gestellt wird.

Auch die in Zukunft zu erwartenden Verbesserungen der Lichtleistung von LED-Lichtquellen können mit der erfindungsgemäßen Vorrichtung ohne weiteres bewältigt werden, so dass mit einer deutlichen Ausweitung der möglichen Einsatzgebiete der erfindungsgemäßen Vorrichtung zu rechnen ist.

### Bezugszeichenliste

- 1: LED-Lichtquelle
- 2: Licht emittierenden Halbleiterfläche
- 3: Platine
- 4: Primärlinsen
- 5: faseroptische Vorrichtung
- 6: zusätzliches optisches Element negativer Brennweite
- 7: Linsenanordnung
- 8: Lichtleiter
- 9: Eintrittsfläche 9
- 10: Eingangslinse
- 11: Ausgangslinse
- 12: Farbbereich
- 13: Farbbereich
- 14: Farbbereich
- 15: Farbbereich
- 16: optische Achse
- 17: Grenzbereiche
- Δ: Raumwinkel der Halbleiterfläche
- x: Eingangsbrennweite
- x': Ausgangsbrennweite
- A: Strahlengang

## Patentansprüche

1. Faseroptische Vorrichtung (5) mit zumindest einer LED-Lichtquelle (1), welche wenigstens eine Licht emittierende Halbleiterfläche (2) aufweist, mit einem faseroptischen Lichtleiter (8), welcher aus einer Vielzahl von optischen Einzelfasern besteht, die an einem Ende zu einer Licht aufnehmende Eintrittsfläche (9) zusammengefasst sind, und einer Linsenanordnung (7) mit einander unmittelbar zugeordneten, optischen Linsen, welche das Licht der LED-Lichtquelle (1) auf die Eintrittsfläche (9) abbildet,
**dadurch gekennzeichnet,**
**dass** die Linsenanordnung (7) wenigstens zwei aspherische Linsen umfasst, mit wenigstens einer Eingangslinse (10) und einer demgegenüber im Durchmesser vergrößerten Ausgangslinse (11), und dass jeder Licht emittierenden Halbleiterfläche (2) eine Eingangslinse (10) zugeordnet ist.

2. Vorrichtung (5) nach Anspruch 1
**dadurch gekennzeichnet,**
**dass** der Abstand (x) zwischen vorderem Scheitelpunkt und Eingangsbrennpunkt der Eingangslinse (10) kleiner ist als der Abstand (x') zwischen hinterem Scheitelpunkt und Ausgangsbrennpunkt der Ausgangslinse (11).

3. Vorrichtung (5) nach einem der Ansprüche 1 oder 2,
**dadurch gekennzeichnet,**
**dass** die Eingangsbrennweite der Ausgangslinse (11) größer ist als ihre Ausgangsbrennweite.

4. Vorrichtung (5) nach einem der Ansprüche 1 bis 3,
**dadurch gekennzeichnet,**
**dass** das Abbildungsverhältnis v der Linsenanordnung (7) zwischen 1:2,4 und 1:2,2 liegt, vorzugsweise v=1:2,3 beträgt.

5. Vorrichtung (5) nach einem der Ansprüche 1 bis 4,
**dadurch gekennzeichnet,**
**dass** für die Aufnahme des Lichts in die Linsenanordnung (7) für jede Licht emittierenden Halbleiterfläche (2) der LED-Lichtquelle (1) jeweils eine Eingangslinse (10) vorgesehen ist.

6. Vorrichtung (5) nach Anspruch 5,
**dadurch gekennzeichnet,**
**dass** die Eingangslinse (10) einen Eingangswinkel ⊖_{E} zur Aufnahme des Lichts der Halbleiterfläche (2) im Bereich zwischen 110° und 130° gewährleistet, vorzugsweise ⊖_{E}=120°.

7. Vorrichtung (5) nach einem der Ansprüche 1 bis 6,
**dadurch gekennzeichnet,**
**dass** die Ausgangslinse (11) der Linsenanordnung (7) das Licht aller Halbleiterflächen mit einem Winkel ⊖_{A} im Bereich zwischen 65° und 75° auf die Eintrittsfläche (9) des Lichtleiters (8) fokussiert, vorzugsweise mit einem Winkel ⊖_{A} = 70°.

8. Vorrichtung (5) nach einem der Ansprüche 1 bis 7,
**dadurch gekennzeichnet,**
**dass** die LED-Lichtquelle (1) eine Licht emittierende Halbleiterfläche (2) aufweist und dass Eingangs- und Ausgangslinse (10, 11) der Linsenanordnung (7) eine optische Achse (16) bilden, auf welcher die Halbleiterfläche (2) und die Eintrittsfläche (9) des Lichtleiters (8) angeordnet sind.

9. Vorrichtung (5) nach einem der Ansprüche 1 bis 7,
**dadurch gekennzeichnet,**
**dass** die LED-Lichtquelle (1) mehr als eine Licht emittierende Halbleiterfläche (2) aufweist und dass die Halbleiterflächen (2) mit den zugeordneten Eingangslinsen (10) eine symmetrische Anordnung im Bezug auf die durch die Ausgangslinse (11) festgelegte, optische Achse (16) aufweisen.

10. Vorrichtung (5) nach Anspruch 9,
**dadurch gekennzeichnet,**
**dass** eine Eingangslinse (10) zentriert auf der durch die Ausgangslinse (11) festgelegten, optischen Achse (16) angeordnet ist.

11. Vorrichtung (5) nach Anspruch 9,
**dadurch gekennzeichnet,**
**dass** jede der Licht emittierenden Halbleiterflächen (2) in verschiedene Farbbereiche (12, 13, 14, 15) mit identischer Farbanordnung unterteilt ist, dass die Halbleiterflächen (2) mit den zugeordneten Eingangslinsen (10) eine symmetrische Anordnung um die optische Achse (16) aufweisen und dass die Anordnung der Farbbereiche (12, 13, 14, 15) jeder Halbleiterfläche (2) in Bezug auf die optische Achse (16) identisch ist.

12. Vorrichtung (5) nach Anspruch 11,
**dadurch gekennzeichnet,**
**dass** die Anzahl der um die optische Achse (16) angeordneten Halbleiterflächen (2) das ein- oder mehrfache der Anzahl der Farbbereiche (12, 13, 14, 15) der Halbleiterflächen (2) beträgt.

13. Vorrichtung (5) nach einem der Ansprüche 11 oder 12,
**dadurch gekennzeichnet,**
**dass** die Halbleiterflächen (2) vier Farbbereiche (12, 13, 14, 15) mit je zwei gleichen und zwei unterschiedlichen Farben aufweisen, vorzugsweise der Farben Rot (R), Grün (G) und Blau (B), und dass jedem der beiden unterschiedlichen Farbbereiche (12, 13, 14, 15) zwei Farbbereiche (13, 15) derselben Farbe benachbart sind.

14. Vorrichtung (5) nach Anspruch 13,
**dadurch gekennzeichnet,**
**dass** die Halbleiterflächen (2) Farbbereiche (12, 13, 14, 15) mit im wesentlichen quadratischer Form aufweisen und dass die Farbbereiche (12, 14) mit unterschiedlichen Farben rotes (R) und blaues (B) Licht emittieren und die beiden Farbbereiche (13, 15) mit gleicher Farbe grünes (G) Licht emittieren.

15. Vorrichtung (5) nach einem der Ansprüche 1 bis 14,
**dadurch gekennzeichnet,**
**dass** die optischen Flächen der Vorrichtung (5) entspiegelt sind.

16. Vorrichtung (5) nach einem der Ansprüche 1 bis 15,
**dadurch gekennzeichnet,**
**dass** die optischen Fasern des Lichtleiters (8) an der Eintrittsfläche (9) heißverschmolzen, verklebt und/oder in einer Abschlusshülse eingepresst sind.

17. Vorrichtung (5) nach einem der Ansprüche 1 bis 16,
**dadurch gekennzeichnet,**
**dass** unmittelbar vor der Eintrittsfläche (9) des Lichtleiters (8) ein zusätzliches optisches Element (6) mit negativer Brennweite eingefügt ist, welches das Licht in einem Winkel ablenkt, der mit der Abbildung der Grenzbereiche (17) zwischen den Licht emittierenden Halbleiterflächen (2) im Raumwinkel der Ausgangslinse (11) in der Weise korrespondiert, dass die Ablenkung Helligkeitsunterschiede auf der Eintrittsfläche (9) des Lichtleiters (8) ausgleicht.
